# DEMANDE DE BREVET EUROPEEN

(11) **EP 2 224 567 A1**
(43) Date de publication de la demande: **01.09.2010**
(21) Numéro de dépôt: 10154484.9
(22) Date de dépôt: 24.02.2010
(51) Int. Cl.: H02G 3/30

(54) **Console de supportage et chemin de câbles comprenant une telle console**

(30) Priorité: 25.02.2009 FR 0951186
(71) Demandeur: Gewiss France SAS, 21430 Liernais (FR)
(72) Inventeur: Leguy, Claude, 21430, Marcheseuil (FR)
(74) Mandataire: Myon, Gérard Jean-Pierre

(57) **Abrégé**

Cette console est formée par découpage et pliage d'un flanc de tôle et s'étend selon un axe (X₂₀₀) longitudinal avec un profil défini par deux parois longitudinales (211, 212) et un fond (219). La console (200) comprend une paroi d'extrémité (214) formée par la superposition de deux pattes (15, 18) prolongeant chacune une des parois longitudinales (211, 212) et pliées à angle droit par rapport à ces parois longitudinales (211, 212). La paroi d'extrémité (214) est pourvue d'une ouverture (215) débouchante en direction du fond (219).

## Description

La présente invention a trait à une console de supportage pour un chemin de câbles ou analogue. La présente invention a également trait à un chemin de câbles comprenant, entre autres, une telle console.

Dans le domaine du supportage de câbles ou autres éléments allongés, il est connu de supporter une goulotte au moyen d'une console fixée sur un mur, une poutre ou un montant vertical. Une telle console peut être réalisée par pliage d'un flanc de tôle, tout en étant pourvue de découpes ou d'orifices constituant des moyens de fixation de la goulotte, par exemple en utilisant des boulons ou des rivets dans le cas d'une goulotte en tôle.

Il est connu, par exemple de WO-A-96/17143, de réaliser un élément porteur pour une structure en treillis avec un profil globalement en forme de Ω renversé. Pour monter cet élément sur un montant vertical, on utilise un support accessoire. II est par ailleurs connu de WO-A-98/27630 d'encastrer une console dans un montant vertical de type rail en « U » en immobilisant cette console sur ce montant grâce à une goupille. Une telle console comprend une paroi dorsale équipée de deux trous de passage de vis en vue de son montage direct sur une paroi ou une poutre. Cette console travaille de façon déséquilibrée dans la mesure où le poids de la goulotte tend à faire basculer la console autour de son point de fixation, dans un rail ou sur une paroi.

Il est par ailleurs connu de EP-A-1 736 075 de réaliser une console de fixation avec un profil en U ouvert vers le bas. Une telle console est dédiée à une fixation sur un montant vertical et ne peut pas être fixée directement sur une paroi ou une poutre.

Enfin, il est connu de EP-A-0 813 280 de réaliser une console en pliant un flanc de tôle de façon à constituer une paroi d'extrémité par la superposition de deux volets pourvus chacun d'un orifice de passage d'une vis de fixation. Le montage d'une telle console sur un mur impose de la maintenir plaquée contre ce mur pendant la mise en place et le vissage de la vis, ce qui est pénible.

C'est à ces inconvénients qu'entend plus particulièrement remédier l'invention en proposant une nouvelle console de supportage qui peut être obtenue par pliage d'un flanc de tôle, c'est-à-dire de façon très économique, et qui est à la fois robuste, adaptée pour être utilisée dans différentes configurations, avec une répartition des efforts optimisée, et facile à installer.

A cet effet, l'invention concerne une console de supportage pour chemin de câbles ou analogue, cette console étant formée par découpage et pliage d'un flanc de tôle et s'étendant selon un axe longitudinal avec un profil défini par deux parois longitudinales et un fond. Cette console comprend une paroi d'extrémité formée par la superposition de deux pattes prolongeant chacune une des parois longitudinales et pliées à angle droit par rapport à ces parois longitudinales. Cette console est **caractérisée en ce que** la paroi d'extrémité est pourvue d'une ouverture débouchante en direction du fond.

Grâce à l'invention, la paroi d'extrémité, qui a une épaisseur double, constitue la zone par laquelle la console peut être fixée sur une cloison ou une poutre. L'ouverture débouchante permet de mettre en place la console sur la cloison, alors même qu'une vis ou une cheville de fixation est déjà en place sur cette cloison. Comme la paroi d'extrémité est constituée de deux pattes qui prolongent respectivement les parois longitudinales, les efforts d'arrachement dus au poids de la goulotte supporté par la console sont répartis entre ces parois longitudinales, ce qui assure une répartition équilibrée de ces efforts. De même en est-il lorsque la console est insérée dans un montant vertical à profil en U.

Selon des aspects avantageux mais non obligatoires de l'invention, une telle console peut incorporer une ou plusieurs des caractéristiques suivantes, prises dans toutes combinaisons techniquement admissible :
- Chaque patte est pourvue d'une ouverture débouchante et l'ouverture débouchante de la paroi d'extrémité est formée par la superposition des ouvertures débouchantes des deux pattes.
- Les parois longitudinales sont parallèles entre elles et perpendiculaires au fond qui est plan.
- La console est équipée de premiers moyens d'accrochage d'une goulotte en tôle et de deuxièmes moyens d'accrochage d'une goulotte en treillis de fils. Dans ce cas, les premiers moyens d'accrochage sont avantageusement supportés par une première paroi, parmi les deux parois longitudinales, alors que les deuxièmes moyens d'accrochage sont supportés par la deuxième paroi longitudinale. On peut, en outre, prévoir que les premiers moyens d'accrochage comprennent au moins un orifice de passage d'un organe de fixation, alors que les deuxièmes moyens d'accrochage comprennent au moins une languette déformable élastiquement entre une configuration où elle ne s'oppose pas à un mouvement d'une goulotte en treillis de fils selon une direction parallèle à l'axe longitudinal, et une deuxième configuration où elle forme une butée au mouvement de la goulotte en treillis de fils, selon la direction parallèle à l'axe longitudinal. Les deux parois longitudinales peuvent former, au niveau de leur bord opposé au fond, des zones de réception en appui d'une goulotte de chemin de câbles ou analogues.
- Chacune des parois longitudinales est pourvue d'un orifice de passage d'un organe de blocage de la console dans un montant vertical.
- Le fond est équipé de moyens de montage d'au moins un accessoire.

L'invention concerne également un tronçon de chemin de câbles qui comprend au moins une goulotte définissant un chemin pour des câbles ou analogues ainsi qu'une console telle que mentionnée ci-dessus.

Un tel chemin de câbles est plus facile à installer que ceux de l'état de la technique.

L'invention sera mieux comprise et d'autres avantages de celle-ci apparaîtront plus clairement à la lumière de la description qui va suivre, de deux modes de réalisation d'une console conforme à son principe, donnée uniquement à titre d'exemple et faite en référence aux dessins annexés, dans lesquels :
- la figure 1 est une vue en plan d'un morceau de flanc de tôle découpé et destiné à être estampé et plié pour constituer une console conforme à l'invention ;
- la figure 2 est vue en perspective d'une console conforme à l'invention réalisée à partir du morceau du flanc de tôle représenté à la figure 1 ;
- la figure 3 est une vue en perspective, selon un autre angle, de la console de la figure 2 ;
- la figure 4 est une vue de dessus de la console des figures 2 et 3 ;
- la figure 5 est une vue de côté de la console des figures 2 à 4 ;
- la figure 6 est une vue d'extrémité de la console des figures 2 à 5, dans le sens de la flèche VI à la figure 5 ;
- la figure 7 est une vue en perspective de la console des figures 2 à 6 en cours de montage sur un mur ;
- la figure 8 est une vue en perspective de la console une fois celle-ci montée sur le mur ;
- la figure 9 est une vue en perspective de la console des figures 2 à 6 dans une deuxième configuration de montage ;
- la figure 10 est une vue en perspective d'une console conforme à un deuxième mode de réalisation de l'invention ;
- la figure 11 est une vue de dessus de la console de la figure 10 ; et
- la figure 12 est une vue de côté de la console des figures 10 et 11.

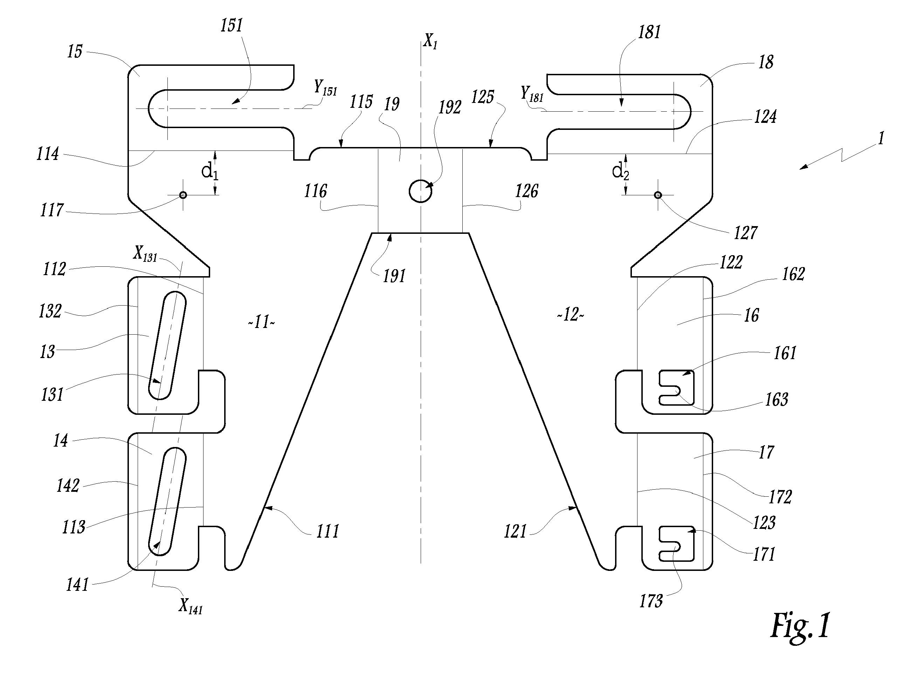

La figure 1 représente, en vue en plan, un morceau de tôle galvanisé à chaud après usinage, ce morceau de tôle étant obtenu par découpage d'un flanc de tôle de dimensions habituelles, par exemple un flanc de tôle de longueur égale à 2 m environ et de largeur égale à 1 m environ. En variante, la tôle utilisée peut ne pas être galvanisée.

Le morceau de tôle 1 peut également être obtenu par découpage dans un outil à suivre, ou « OAS », à partir d'un rouleau de feuillard. Dans ce cas, les opérations postérieures à la découpe sont automatisées et réalisées dans le même outil. La pièce sort alors finie de l'outil. La conception de la console de l'invention la rend compatible avec un tel mode de fabrication, ce qui augmente encore son intérêt en termes économiques.

Le morceau de tôle 1 comprend deux parties pleines 11 et 12 de forme globalement triangulaire et disposées de part et d'autre d'un axe longitudinal Xᵢ. La partie pleine 11 est définie entre une arête 111, deux lignes de pliage 112 et 113 parallèles à l'axe X₁ une ligne de pliage 114 perpendiculaire à l'axe X₁, une arête 115 également perpendiculaire à cet axe et une ligne de pliage 116 parallèle à cet axe.

Au-delà des lignes de pliage 112 et 113, la partie pleine 11 se prolonge par deux pattes 13 et 14 percées chacune d'une ouverture 131 ou 141 de forme oblongue et dont les axes longitudinaux X₁₃₁ et X₁₄₁ sont inclinés par rapport à l'axe X₁ sans être perpendiculaire à celui-ci. Une ligne de pliage 132, respectivement 142 est prévue sur chaque patte 13 ou 14, parallèle à la ligne de pliage 112 ou 113 qui délimite cette patte.

Une patte 15 prolonge la partie pleine 11 au-delà de la ligne de pliage 114 et est percée d'une ouverture allongée 151 dont le plus grand axe Y₁₅₁ est perpendiculaire à l'axe X₁, cette ouverture étant débouchante en direction de l'axe X₁

De la même façon, la partie pleine 12 est délimitée par deux arêtes 121 et 125 et quatre lignes de pliage 122, 123, 124 et 126 respectivement symétriques des arêtes 111 et 115 et des lignes de pliage 112, 113, 114 et 116. Des pattes 16, 17 et 18 sont ménagées, respectivement au-delà des lignes de pliage 122, 123 et 124, par rapport à la partie pleine 12. Les pattes 16 et 17 sont chacune percée d'une ouverture 161 ou 171, dans laquelle s'étend, perpendiculairement à l'axe X₁, une languette ou un « doigt » 163, respectivement 173. Des lignes de pliage 162 et 172 sont prévues sur les pattes 16 et 17 et sont parallèles respectivement aux lignes de pliages 122 et 123. La patte 18 est, quant à elle, pourvue d'une ouverture 181 symétrique de l'ouverture 151 par rapport à l'axe X₁ En particulier, l'ouverture 181 s'étend selon un axe Y₁₈₁, perpendiculaire à l'axe X₁ et cette ouverture est débouchante du côté de l'axe X₁.

On note 191 une arête perpendiculaire à l'axe X₁ et reliant les arêtes 111 et 121. La ligne de pliage 116 relie les arêtes 191 et 115, à proximité de l'arête 111, alors que l'arête de pliage 126 relie les arêtes 125 et 191, à proximité de l'arête 121.

Une partie rectangulaire 19 du morceau 1 s'étend entre les arêtes 115, 125 et 191 et entre les lignes de pliage 116 et 126. Cette partie 19 est percée d'un orifice circulaire 192.

Chaque partie 11 et 12 est percée d'un orifice circulaire 117, respectivement 127, de petit diamètre. La distance d₁, respectivement d₂, prise parallèlement à l'axe X₁, entre le centre de chaque orifice 117 ou 127 et la ligne de pliage 114 ou 124 la plus proche est inférieure à 16 mm, de préférence égale à environ 14 mm. La distance d₂ est légèrement inférieure à la distance d₁, d'une valeur égale à l'épaisseur du morceau de tôle 1.

Lorsqu'il convient de fabriquer une console 200 de supportage pour un chemin de câble ou analogue, le morceau de tôle 1 est déformée plastiquement pour agrandir les orifices 117 et 127 et former autour de ceux-ci un relief annulaire 118 ou 128 qui comprend une partie en forme de mandrin tubulaire 118a ou 128a.

Les parties pleines 11 et 12 sont également déformées localement pour créer deux reliefs 119 et 129 de forme globalement triangulaire, ces reliefs ayant pour fonction de rigidifier les parties 11 et 12.

Les reliefs 118, 119, 128 et 129 sont formés par pliage et/ou cambrage du morceau de tôle 1.

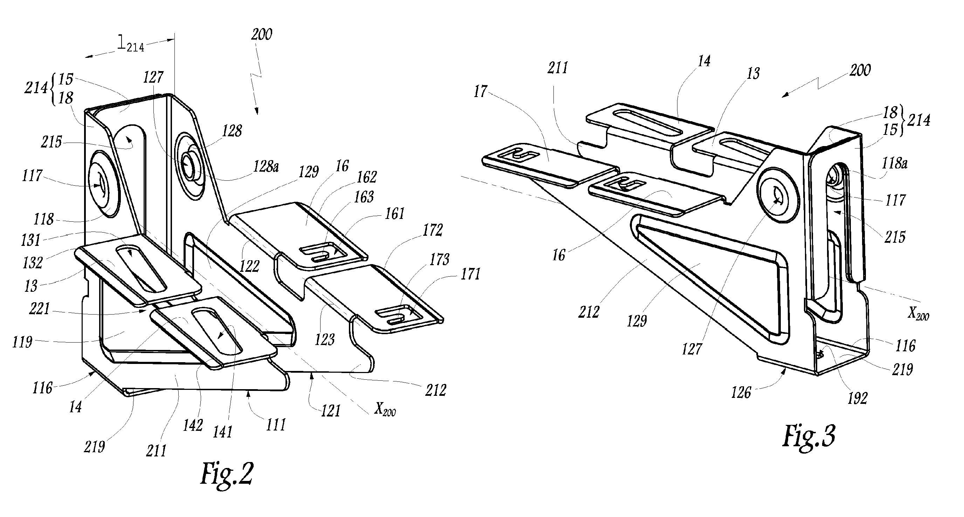

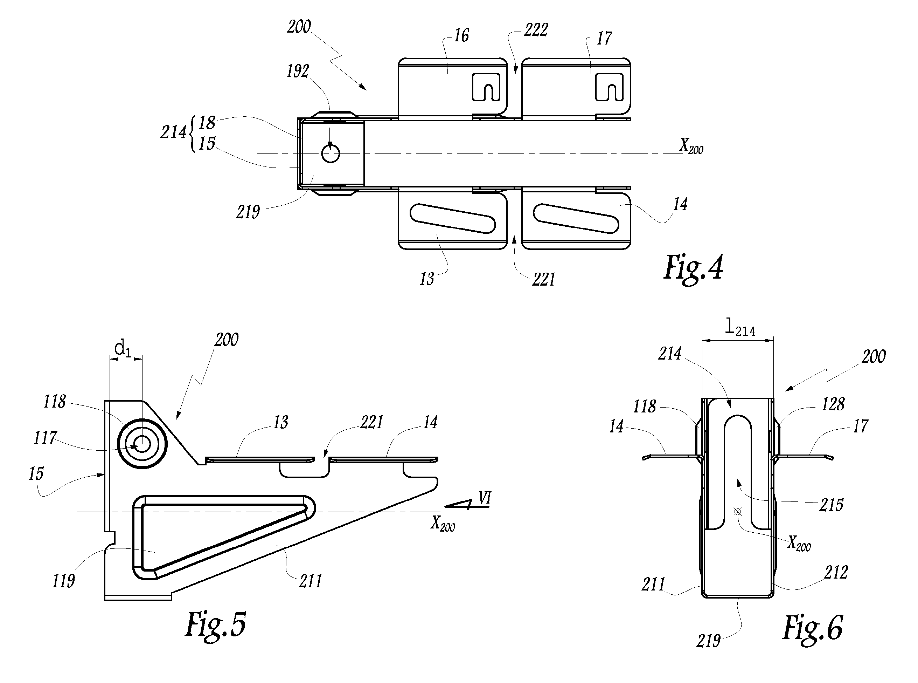

Lorsque le morceau de tôle 1 a été estampé comme mentionné ci-dessus, il est plié selon les lignes de pliage susmentionnées, pour être amené dans la configuration des figures 2 à 6 où la console 200 s'étend le long d'un axe longitudinal X₂₀₀ de part et d'autre duquel sont formés deux parois longitudinales 211 et 212 de forme globalement triangulaires et qui sont obtenues à partir des parties pleines 11 et 12 du morceau 1. Ces parois longitudinales 211 et 212 sont reliées par un fond plan 219 auquel elles sont perpendiculaires du fait du pliage du morceau 1 à 90° le long des lignes de pliages 116 et 126. Après pliage le long des lignes 116 et 126, les parois 211 et 212 sont parallèles. Le profil transversal de la console 200, qui est visible à la figure 6 et défini par les parois 211, 212 et par le fond 219, est donc en forme de U à fond plat.

Une paroi d'extrémité ou paroi dorsale 214 de la console 200 est formée par la superposition des pattes 15 et 18 du morceau 1, celles-ci étant pliées à angle droit et selon deux directions opposées le long des lignes de pliages 114 et 124, par rapport aux parties pleines 11 et 12 qui forment les parois 211 et 212. Les pattes 15 et 18 sont en appui l'une contre l'autre pour former la paroi d'extrémité 214 et leurs ouvertures respectives 151 et 181 se superposent, de telle sorte qu'elles définissent ensemble une ouverture 215 débouchante en direction du fond 219, c'est-à-dire vers le bas lorsque la console 200 est en configuration d'utilisation avec les pattes 13, 14, 16 et 17 disposées en partie supérieure des parois 211 et 212.

La paroi dorsale 214 ainsi constituée est particulièrement solide puisque son épaisseur est double de celle des autres parois et du fond de la console 200, alors que les pattes 15 et 18 sont respectivement monoblocs avec les parois 211 et 212.

Les pattes 13, 14, 16 et 17 sont disposées au niveau des lignes de pliage 112, 112, 122 et 123 qui forment les bords des parois 211 et 212 opposés au fond 219.

Le caractère débouchant de l'ouverture 214 permet un montage rapide et aisé de la console 200 sur un mur M.

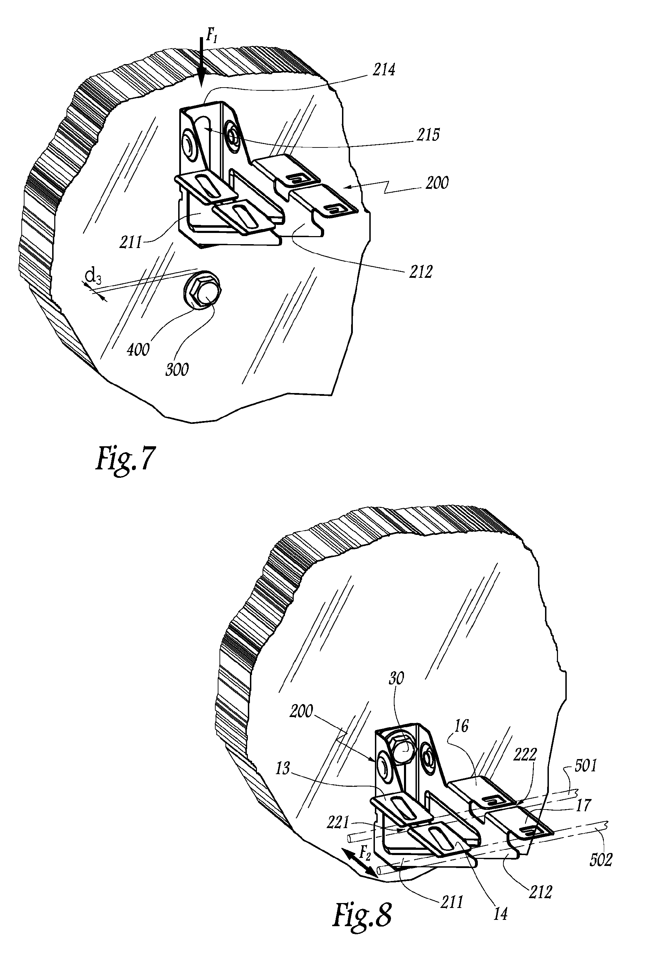

Comme il ressort des figures 7 et 8, il est possible de visser une vis 300 équipée d'une rondelle 400 dans un mur M jusqu'à ce que la tête 301 de la vis soit à une distance d₃ du mur M de l'ordre de 7 à 8 mm. Il est alors possible de faire glisser, dans le sens de la flèche F₁ à la figure 7, la paroi 214 le long du mur M jusqu'à lui faire chevaucher la tige de la vis 300, c'est-à-dire en introduisant cette tige dans l'ouverture 215. Ce montage est possible du fait du caractère débouchant de l'ouverture 215 en direction du fond 219.

On peut alors procéder au serrage final de la vis 300. Cette opération permet d'immobiliser facilement et rapidement la console 200 sur le mur M, dans une position où elle peut recevoir deux types de goulotte de chemin de câbles.

A la place d'une vis 300, on peut utiliser une cheville impactée dans le mur M.

Il est possible de poser sur les faces supérieures des pattes 13, 14, 16 et 17 rabattues perpendiculairement aux parties pleines 11 et 12, une goulotte en tôle telle que connue par exemple de FR-A-2 686 141. On peut amener un orifice ménagé dans le fond d'une telle goulotte en regard de l'une des ouvertures 131 et 141, puis insérer dans les ouvertures et orifices ainsi alignés une vis ou un rivet d'immobilisation.

Les ouvertures 131 et 141 constituent donc des moyens d'accrochage d'une goulotte en tôle pliée sur la console 200.

Lorsqu'on utilise une goulotte en treillis de fils soudés telle que connue, par exemple, de EP-A-0 533 039, on peut engager l'un des fils longitudinaux de la goulotte dans les fentes 221 et 222 ménagées respectivement entre les pattes 13 et 14, d'une part et entre les pattes 16 et 17, d'autre part, puis déplacer ce fil longitudinal en direction de la paroi d'extrémité 214.

La longueur prise parallèlement à l'axe X₁, des pattes 14 et 17, peut être choisie sensiblement égale au pas d'écartement des fils longitudinaux de fond d'une goulotte en treillis à supporter, de telle sorte que des fils longitudinaux 501 et 502 de la console peuvent être amenés simultanément sous les extrémités des pattes 13, 14, 16 et 17, comme représenté en traits mixtes uniquement à la figure 8.

Dans cette position, les fils de trame peuvent avoir un mouvement parallèle à l'axe X₂₀₀, ce mouvement étant représenté par la flèche F₂. Lorsque l'on souhaite immobiliser une goulotte en treillis de fils de chaîne, il suffit de déformer plastiquement les doigts 163 et 173, pour les faire passer dans une configuration où ils s'étendent perpendiculairement aux pattes 16 et 17, vers le bas à la figure 8.

Ainsi, les doigts 163 et 173 constituent des moyens d'accrochage d'une goulotte en treillis de fils sur la console 200, puisqu'ils peuvent s'opposer à un mouvement d'arrachement ou de basculement correspondant à un glissement parallèle à l'axe X₂ et s'éloignant de la paroi 214.

Le fait que la paroi d'extrémité ou paroi dorsale 214 est monobloc, par la patte 15, avec la paroi 211 et, par la patte 18, avec la paroi 212 assure une répartition optimisée des efforts transmis entre une goulotte supportée par la console 200, le mur M et la vis 300. Cette répartition d'efforts est symétrique de part et d'autre de l'axe X₂₀₀.

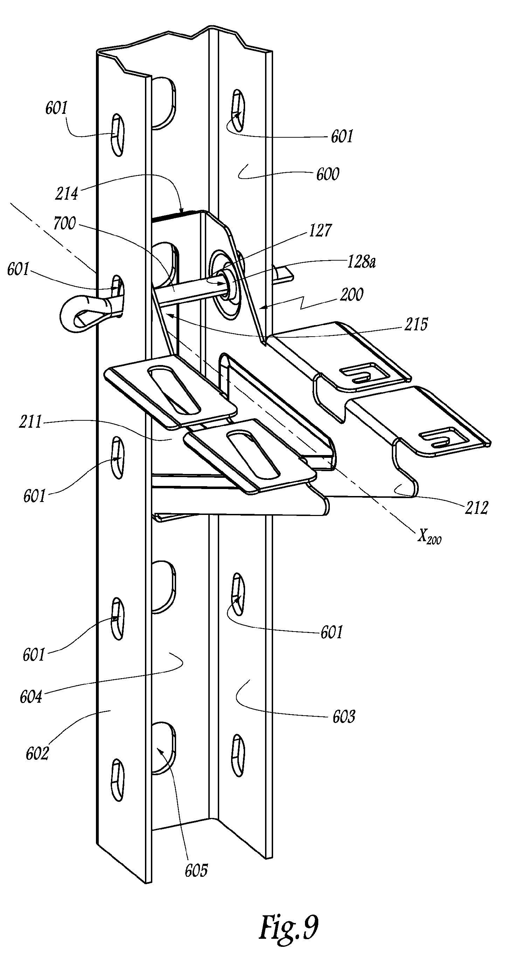

La console 200 peut également être montée dans un poteau ou montant 600 suspendu à un plafond par des moyens non représentés à la figure 9. Le montant 600 peut également être monté sur une paroi verticale telle qu'un mur. Cette configuration est avantageuse lorsqu'on doit superposer plusieurs chemins de câbles car elle réduit le nombre de points de fixation sur la paroi.

Dans ce cas, on utilise une goupille 700 engagée à la fois dans les orifices 117 et 127 et dans deux ouvertures oblongues 601 ménagées dans deux parois latérales 602 et 603 du poteau 600, ces parois étant reliées par un fond ou dos 604 dans lequel sont ménagées d'autres ouvertures oblongues 605.

Les manchons tubulaires 118a et 128a des reliefs annulaires 118 et 128 formés autour des orifices 117 et 127 permettent de réduire l'effet de matage sur la goupille 700 lorsqu'une charge est appliquée sur la console 200 dans la configuration de la figure 9.

Ceci permet également de réduire le jeu transversal entre les pièces 200 et 600 sans augmenter la largeur I₂₁₄ de la paroi 214. En effet, cette largeur I₂₁₄ doit être conservée relativement faible car elle concourt à la résistance de la console 200 dans la mesure où les parois 211 et 212 doivent être au plus près de la cheville 300 dans la configuration de la figure 8 pour éviter une déformation des pattes 15 et 18 sous l'effort d'arrachement.

En variante, les manchons 118a et 128a, ou l'un des deux, peuvent être filetés, ce qui permet de remplacer la goupille 700 par une vis.

En configuration installée du poteau 600, les ouvertures 601 se rapprochent du dos 604 en allant vers le bas. Du fait du poids de la console 200 et des éléments qu'elle supporte, la goupille 700 engagée dans les ouvertures 601 et dans les orifices 117 et 127 tend à glisser vers le bas, ce qui rapproche la paroi dorsale 214 de la console 200 du fond 604 contre lequel elle vient en appui, facilitant ainsi la reprise d'effort entre la console 200 et le poteau 600.

Comme les orifices 117 et 217 sont respectivement ménagés dans les parois 211 et 212, la résultante du poids de la console 200 et des éléments qu'elle supporte est également répartie entre les parois 602 et 603, ce qui réduit substantiellement, voire annule, le moment de basculement de la console 200 autour de son axe longitudinal X₂₀₀.

Dans la mesure où la section transversale du montant 600 est connue lors de la fabrication de la console 200, la valeur des distances d₁ et d₂ entre les centres des orifices 117 et 127 et les lignes de pliage 114 et 124 sont choisies de telle sorte que la paroi dorsale ou d'extrémité 214 porte contre le fond 604 lorsque la goupille est en appui sur le bas des ouvertures oblongues 601. Dans cette configuration, la goupille 700 demeure à distance de l'extrémité inférieure arrondie de chaque ouverture 601, ce qui permet de rattraper les tolérances de fabrication.

Comme précédemment, une goulotte en tôle ou une goulotte en treillis de fils peut être montée sur la console 200 en utilisant les moyens d'accrochage dédiés 131, 141, 163 et 173.

On note que les moyens d'accrochage dédiés aux goulottes en tôle sont portés par la paroi longitudinale 211 au voisinage de son bord supérieur 112-113, alors que les moyens d'accrochage d'une goulotte en treillis de fils sont portés par la paroi latérale 212, au voisinage de son bord supérieur 122-123.

L'orifice 192 ménagé dans le fond 219 permet d'accrocher à la console 200 un accessoire tel qu'un support de tuyau de plomberie ou équivalent. Pour ce faire, il suffit d'insérer dans cet orifice une vis ou un rivet. En variante, un écrou-cage peut être fixé sur le fond 219 par tout moyen approprié, notamment par soudage.

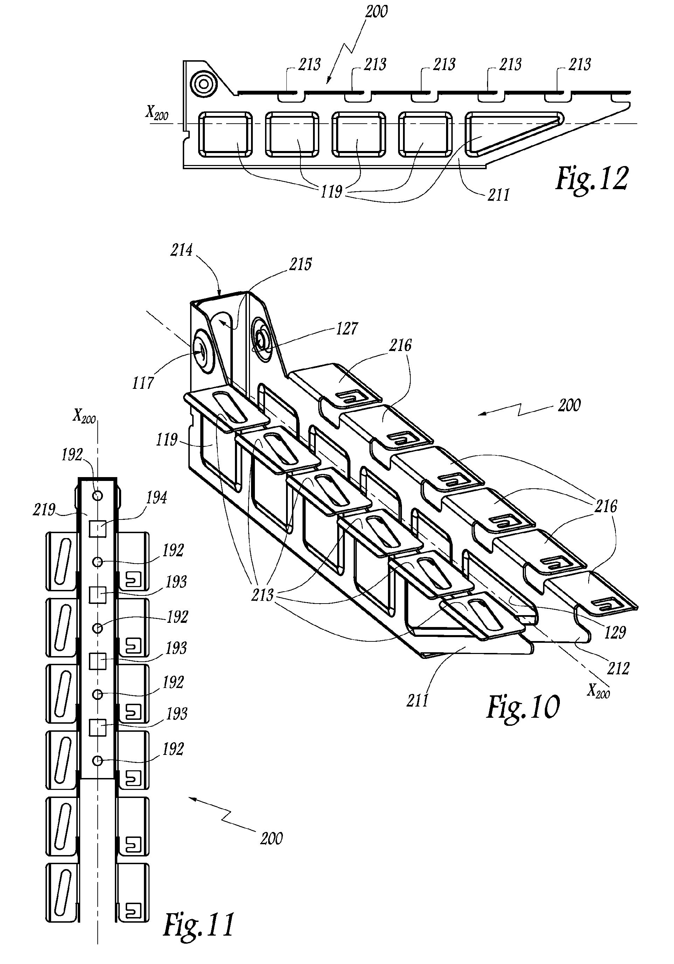

Dans le deuxième mode de réalisation représenté aux figures 10 à 12, les éléments analogues au premier mode de réalisation portent les mêmes références. La console 200 de ce mode de réalisation diffère de la précédente essentiellement en ce qu'elle est plus longue le long de son axe longitudinal X₂₀₀. Plus précisément, chacune des parois longitudinales 211 et 212 de la console 200 est équipée, en partie supérieure, de six pattes 213 et 216 respectivement analogues aux pattes 13 et 14 et aux pattes 16 et 17 du premier mode de réalisation. Cette console permet donc d'accueillir des goulottes de largeur plus importante que celles que peut accueillir la console 200 du premier mode de réalisation.

Des reliefs 119 et 129 sont répartis sur la longueur des parois 211 et 212 afin de les rigidifier. Ces reliefs peuvent, en variante, être réunis en un seul relief.

Comme il ressort plus particulièrement de la figure 11, le fond 219 de la console est percé d'orifices circulaires 192 analogues à celui du premier mode de réalisation et d'orifices 193 à section carrée sur lesquels peut être coincé, riveté ou vissé un accessoire tel qu'un support de tuyau de plomberie.

Comme précédemment, la paroi d'extrémité ou paroi dorsale 214 de la console 200 est formée par la superposition de deux pattes qui prolongent respectivement les parois 211 et 212 et qui délimitent ensemble une ouverture 214 débouchante en direction du fond 219. Des orifices 117 et 127 sont ménagés dans les parois 211 et 212 comme dans le premier mode de réalisation.

La console 200 du deuxième mode de réalisation peut être montée sur un mur, de façon analogue à ce qui est représenté aux figures 7 et 8 ou dans un poteau ou montant à section en U, de façon analogue à ce qui est représenté à la figure 9.

L'invention n'est pas limitée aux modes de réalisation décrits. En particulier, la longueur de la console, prise parallèlement à son axe longitudinal X₂₀₀, peut être adaptée à la largeur des goulottes à supporter.

## Revendications

1. Console (200) de supportage pour chemin de câbles ou analogue, cette console étant formée par découpage et pliage d'un flanc de tôle, s'étendant selon un axe (X₂₀₀) longitudinal avec un profil défini par deux parois longitudinales (211, 212) et un fond (219) et comprenant une paroi d'extrémité (214) formée par la superposition de deux pattes (15, 18) prolongeant chacune une des parois longitudinales (211, 212) et pliées à angle droit par rapport à ces parois longitudinales, **caractérisée en ce que** la paroi d'extrémité est pourvue d'une ouverture (215) débouchante en direction du fond (219).

2. Console selon la revendication 1, **caractérisée en ce que** chaque patte (15, 18) est pourvue d'une ouverture (151, 181) débouchante et **en ce que** l'ouverture débouchante (215) de la paroi d'extrémité (214) est formée par la superposition des ouvertures débouchantes des deux pattes.

3. Console selon l'une des revendications précédentes, **caractérisée en ce que** les parois longitudinales (211, 212) sont parallèles entre elles et perpendiculaires au fond (219) qui est plan.

4. Console selon l'une des revendications précédentes, **caractérisée en ce qu'**elle est équipée de premiers moyens (131, 141) d'accrochage d'une goulotte en tôle et de deuxièmes moyens (163, 173) d'accrochage d'une goulotte en treillis de fils.

5. Console selon la revendication 4, **caractérisée en ce que** les premiers moyens d'accrochage (131, 141) sont supportés par une première paroi (211), parmi les deux parois longitudinales, alors que les deuxièmes moyens d'accrochage (163, 173) sont supportés par la deuxième paroi longitudinale (212).

6. Console selon l'une des revendications 4 ou 5, **caractérisée en ce que** les premiers moyens d'accrochage comprennent au moins un orifice (131, 141) de passage d'un organe de fixation, alors que les deuxièmes moyens d'accrochage comprennent au moins une languette (163, 173) déformable plastiquement entre une première configuration où elle ne s'oppose pas à un mouvement (F₂) d'une goulotte en treillis de fils (501, 502) selon une direction parallèle à l'axe longitudinal (X₂₀₀) et une deuxième configuration où elle forme une butée au mouvement de la goulotte en treillis selon la direction parallèle à l'axe longitudinal.

7. Console selon l'une des revendications 4 à 6, **caractérisée en ce que** les deux parois longitudinales (211, 212) forment, au niveau de leurs bords (112, 113, 122, 123) opposés au fond (219), des zones de réception (13, 14, 15, 16) en appui d'une goulotte de chemin de câbles ou analogue.

8. Console selon l'une des revendications précédentes, **caractérisée en ce que** chacune des parois longitudinales (211, 212) est pourvue d'un orifice (117, 127) de passage d'un organe (700) de blocage de la console (200) dans un montant vertical (600).

9. Console selon l'une des revendications précédentes, **caractérisée en ce que** le fond (219) est équipé de moyens (192, 193) de montage d'au moins un accessoire.

10. Tronçon de chemin de câbles comprenant au moins une goulotte définissant un chemin de câbles ou analogue et au moins une console (200) selon l'une des revendications précédentes.
